# EUROPEAN PATENT APPLICATION

(11) **EP 1 739 541 A2**
(43) Date of publication of application: **03.01.2007**
(21) Application number: 06116170.9
(22) Date of filing: 27.06.2006
(51) Int. Cl.: G06F 3/12

(54) **Print system**

(30) Priority: 28.06.2005 JP 2005189065
(71) Applicant: STAR MICRONICS CO., LTD., Shizuoka-shi, Shizuoka (JP)
(72) Inventor: OWEN, Lawrence, Aylesbury, Buckinghamshire HP18 9QL (GB)
(74) Representative: Weihs, Bruno Konrad

(57) **Abstract**

A print system, and a computer-readable program product for causing a computer to function as a print system, causes a printer to produce a printout of an image based on print data generated by any one of a plurality of programs. The print system includes: a print image data generation unit that generates raster image data pertaining to an image to be printed, based on the print data; a print image data processing unit that performs a rotating process for rotating in 180 degrees the raster image data generated by the print image data generation unit; and a print instruction unit that causing the printer to produce a printout of the raster image data that is performed with the rotating process by the print image data processing unit. A method for controlling a print system for causing a printer to produce a printout of an image based on print data generated by any one of a plurality of programs includes: generating first raster image data based on the print data; generating second raster image data for printing out a second image being rotated in 180 degrees from a first image that is to be printed out based on the first raster image data, by performing an image processing onto the first raster image data; and causing the printer to produce a printout of the second raster image data.

## Description

### TECHNICAL FIELD

The present invention relates to a print system.

### BACKGROUND

A commonly-known print system includes a computer which executes an application program, and a printer, and causes the printer to produce a printout of a document and an image created by an application program. For example, a known print system causes a printer to produce a printout of the image of a register tape or a receipt (hereinafter called a "receipt image") created by a POS (Point Of Sales) application program.

In the above print system, an image recording medium (e.g., a print sheet) is usually output from the printer in such a way that a portion of the image recording medium, where an upper part of an image to be printed is formed, comes first. Accordingly, there is a case where, when picking up the image recording medium output from the printer and referring to details of the image recording medium, the user must switch the image recording medium from one hand to the other hand in order to change the orientation of the image recording medium (in order to rotate the image recording medium in 180 degrees).

### SUMMARY

A print system for causing a printer to produce a printout of an image based on print data generated by any one of a plurality of programs. The print system includes: a print image data generation unit that generates first raster image data pertaining to an image to be printed based on the print data; a print image data processing unit that generates second raster image data for printing out a second image being rotated in 180 degrees from a first image that is to be printed out based on the first raster image data, by performing an image processing onto the first raster image data and a print instruction unit that causes the printer to produce a printout of the second raster image data.

A method for controlling the print system, the method includes: generating first raster image data based on the print data; generating second raster image data for printing out a second image being rotated in 180 degrees from a first image that is to be printed out based on the first raster image data, by performing an image processing onto the first raster image data; and causing the printer to produce a printout of the second raster image data.

A computer-readable program product for causing a computer to function as a print system for causing a printer to produce a printout of an image based on print data generated by any one of a plurality of programs, the program product causing the computer to perform procedures including: generating first raster image data pertaining to an image to be printed based on the print data; generating second raster image data for printing out a second image being rotated in 180 degrees from a first image that is to be printed out based on the first raster image data, by performing an image processing onto the first raster image data; and causing the printer to produce a printout of the second raster image data.

### BRIEF DESCRIPTION OF THE DRAWINGS

In the accompanying drawings:
Fig. 1 is a view showing the entire configuration of a print system according to an embodiment;
Fig. 2 is a view for describing operation of a host computer;
Fig. 3 is a view showing an example receipt image;
Fig. 4 is a view showing an example processed receipt image;
Fig. 5 is a view showing another example processed receipt image;
Fig. 6 is a view showing yet another example processed receipt image;
Figs. 7A and 7B are views for describing output of an image recording medium from a printer;
Fig. 8 is a functional block diagram of the print system according to an embodiment;
Fig. 9 is a view showing an example keyword table;
Fig. 10 is a view showing an example set of processing specifics data;
Fig. 11 is a view showing an example set of environment setting data;
Fig. 12 is a flowchart showing processing executed by a print data processing unit; and
Fig. 13 is a view showing an example journal file.

### DETAILED DESCRIPTION

Embodiments of the present invention will be described in detail below with reference to the accompanying drawings.

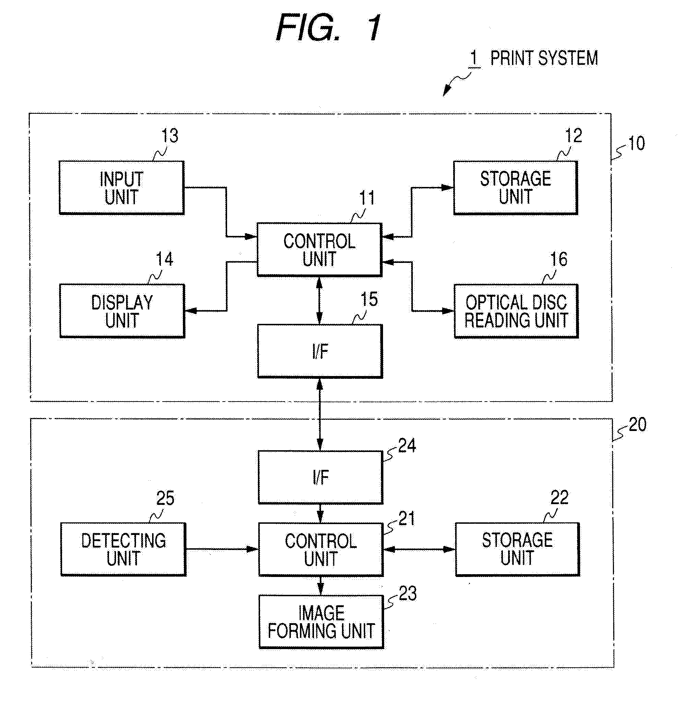

Fig. 1 is a view showing an entire configuration of a print system according to an embodiment. As illustrated, the print system 1 includes a host computer 10 (a print request device), and a printer 20.

As shown in Fig. 1, the host computer 10 is a computer which includes: a control unit 11; a storage unit 12; an input unit 13; a display unit 14; an interface (I/F) 15; and an optical disc reading unit 16.

The control unit 11 operates in accordance with an operating system and other programs, which are stored in the storage unit 12, to thus execute various information processing operations. The storage unit 12 is formed from a computer-readable information storage medium. For example, the storage unit 12 is constituted by including ROM (Read Only Memory), RAM (Random Access Memory), and a hard disk drive. The storage unit 12 stores a program to be executed by the control unit 11. The storage unit 12 also operates as work memory which stores various types of data required during the course of processing performed by the control unit 11.

The input unit 13 is, e.g., a keyboard, a mouse, or the like, and inputs to the control unit 11 the data conforming to an input performed by the user. The display unit 14 is, e.g., a display or the like, and displays information in accordance with an instruction input from the control unit 11. In accordance with the instruction input from the control unit 11, the optical disc reading unit 16 reads a program or data stored in an optical disc (an information storage medium); e.g., a DVD-ROM or the like.

The interface 15 is for connecting various peripheral devices or information storage medium (such as memory cards) to the host computer 10. The interface 15 outputs the data input from a peripheral device, or the like, to the control unit 11. In accordance with the instruction input from the control unit 11, the interface 15 outputs various data to the peripheral device, or the like. The host computer 10 is provided with one or a plurality of connection ports (hereinafter called "USB ports") complying with, e.g., USB (Universal Serial Bus) interface specifications.

In one or more embodiments, Windows OS (Registered Trademark) manufactured by Microsoft Corporation is assumed to be installed in the host computer 10 as an operating system. Further, a POS application program having a receipt creation function (hereinafter described as a "POS application") is also assumed to be installed in the host computer 10.

The host computer 10 is connected to the printer 20 by way of the interface 15 so that data can be exchanged between the computer and the printer. As shown in Fig. 1, the printer 20 includes a control unit 21, a storage unit 22, an image-forming unit 23, and an interface (I/F) 24.

The control unit 21 controls the entirety of the printer 20. The storage unit 22 includes ROM or RAM, and stores various programs and data, which are required for effecting printing operation. The interface 24 receives the data transmitted from the host computer 10, and outputs the thus-received data to the control unit 21. The printer 20 is provided with, e.g., a USB port, as the interface 24. The image-forming unit 23 forms an image, which is based on the data input by the control unit 21, on an image recording medium, such as a print sheet or the like.

The printer 20 herein is assumed to receive from the host computer 10 raster image data of a predetermined data format (more accurately, command data representing coloring information about respective pixels constituting an image), and to form the raster image data on an image recording medium. The printer 20 is also assumed to have an automatic cutting mechanism; to receive from the host computer 10 command data which instruct cutting of the image recording medium, in conjunction with the command data used for forming an image on the image recording medium; and to cut the image recording medium at a given position in a given mode.

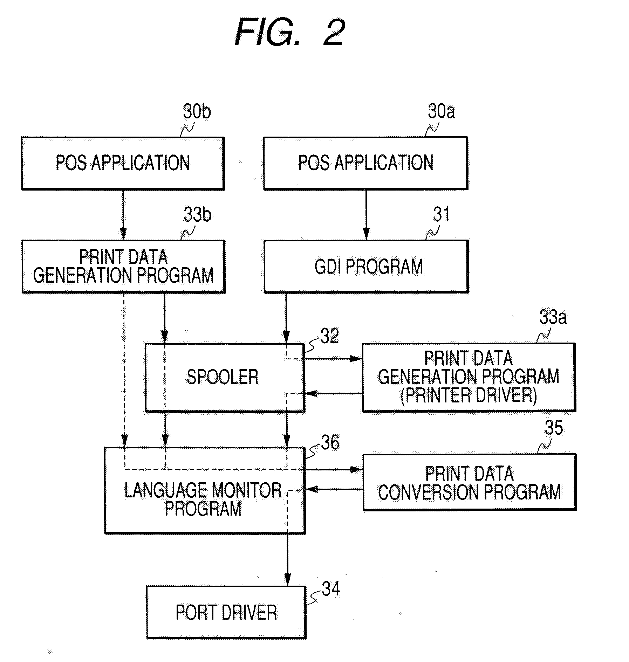

Operation of the host computer 10 performed when the printer 20 is caused to print the receipt image created by the POS application will now be described. Fig. 2 is a view for describing the operation of the host computer 10. Although a POS application program 30a and a POS application program 30b are provided in the drawing, at least one of the application programs is installed in the host computer 10.

When the POS application 30a has issued a command to print the receipt image, a GDI (Graphic Device Interface) program 31 generates meta data representing the command to render the receipt image. This GDI program 31 is a program provided as a part of the operating system, and the meta data do not depend on a device.

The metadata generated by the GDI program 31 are supplied to a print data generation program (a printer driver) 33a by way of a spooler 32. The print data generation program 33a generates print data of a predetermined data format based on metadata. The print data to be generated may be interpretable or uninterpretable for the printer 20. For example, the print data may be interpretable for a printer which differs from the printer 20 in terms of specifications.

The print data generation program 33a herein is assumed to generate as print data, command data representing the kind of a type font, command data showing print details of each line (a string of print characters for each line), command data used for controlling the mechanism of the printer (e.g., command data for instructing a position at which the image recording medium is to be cut), or the like.

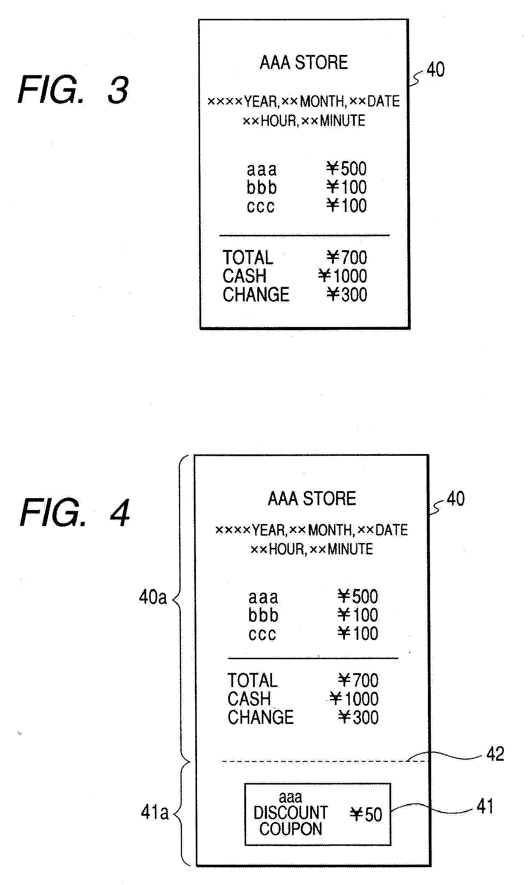

When an instruction for printing a receipt image 40, such as that shown in Fig. 3, has been issued, the print data generation program 33a first generates initialization command data, and supplies the thus-generated initialization command data to the spooler 32. Next, the print data generation program 33a generates command data representing top, bottom, right, and left margins of an image recording medium, and supplies the command data to the spooler 32. Subsequently, for example, the print data generation program 33a generates, as appropriate, command data representing the kind of a type font, command data representing a position at which the image recording medium is to be cut and a mode of cutting the same, or the like; and supplies the command data to the spooler 32.

The print data generation program 33a sequentially generates command data representing print details of each line; e.g., "A" "A" "A" "□" "S" "T" "O" "R" "E" LF, "Y" "E" "A" "R" "M" "O" "N" "T" "H" "D" "A" "T" "E" LF "H" "O" "U" "R" "M" "I" "N" "U" "T" "E" LF, or "a" "a" "a" "¥" "5" "0" "0" LF, and supplies the thus-generated command data to the spooler 32. Finally, the print data generation program 33a generates command data showing the end of a page, and supplies the command data to the spooler 32. In the above descriptions, "LF" denotes command data showing a line feed.

When the POS application 30b has issued an instruction for printing a receipt image, a print data generation program 33b generates print data. The print data generation program 33b is a program called by a designation other than a "printer driver," and is, e.g., a program which is supplied as a part of the POS application 30b. The print data generation program 33b generates print data similar to that generated by the print data generation program 33a.

The original print data generated by the print data generation program 33a or 33b are temporarily retained in the storage unit 12 by means of the spooler 32. The spooler 32 sequentially transmits the print data to the printer 20 while monitoring the status of the printer 20. Specifically, the spooler 32 sequentially supplies the print data to the port driver 34 in order to output the original print data from the port connected to the printer 20.

A language monitor program 36 monitors supply of print data from the spooler 32 to the port driver 34. The language monitor program 36 is used for receiving status information from the printer 20 by way of the port driver 34 and supplying the information to a predetermined program (e.g., a status reference program or the like). When having detected the print data supplied from the spooler 32, the language monitor program 36 restricts (hinders) supply of the print data to the port driver 34, and supplies the print data to a print data conversion program 35.

The print data conversion program 35 interprets the print data (command data) sequentially supplied from the language monitor program 36, to thus generate raster image data pertaining to the entirety of a receipt image which is an object of printing. The print data conversion program 35 subjects the raster image data to various types of image processing.

Various image processing operations executed by the print data conversion program 35 will be described.

Based on the print data (more specifically, command data representing print specifics of each line) supplied from the language monitor program 36, the print data conversion program 35 determines whether or not the receipt image includes a predetermined keyword. The keyword is, e.g., the name of a specific commodity, a specific corporate name, or the like. According to the result of determination, the print data conversion program 35 pastes an image corresponding to the keyword to the receipt image. For example, when the receipt image includes the name of a specific commodity, an advertisement image, or the like --which is relevant to the commodity or another product related thereto-- is pasted to the receipt image. As shown in, e.g., Fig. 3, when the receipt image 40 includes the name of a commodity "aaa," a coupon image 41 of the commodity "aaa" is pasted to the receipt image 40 along with a broken line 42, as shown in Fig. 4. There may also be a case where a plurality of coupon images are pasted to the receipt image. In an example shown in, e.g., Fig. 4, there may be a case where a coupon image of a commodity "bbb" is further pasted to a position below the coupon image 41 of the commodity "aaa" along with a broken line. In the following descriptions, this function of pasting an image corresponding to a keyword to a receipt image, which is executed by the print data conversion program 35, is described as a "keyword-invoked image pasting function."

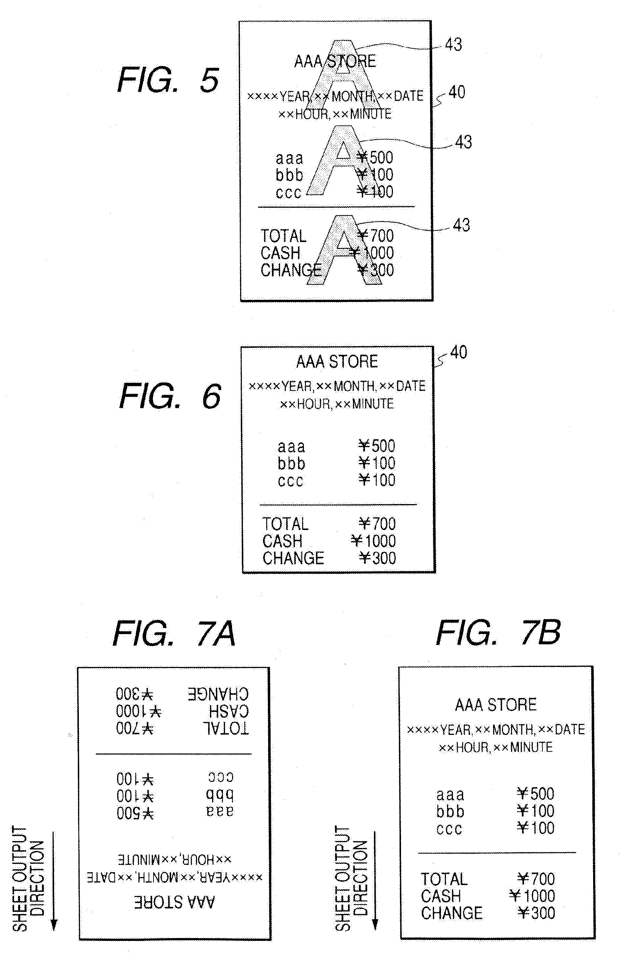

For example, the print data conversion program 35 pastes a predetermined background image to the receipt image. For example, a watermark image 43, such as that shown in Fig. 5, is pasted to the receipt image 40. In the following descriptions, the function of pasting a predetermined background image to a receipt image, which is executed by the print data conversion program 35, is described as a "background image pasting function."

For example, the print data conversion program 35 removes at least portions of the top and bottom margins of the receipt image 40, as shown in Fig. 6. In the following descriptions, the function of removing at least portions of the top and bottom margins of the receipt image, which is executed by the print data conversion program 35, is described as a "margin removal function."

For example, as shown in Fig. 7A, the print data conversion program 35 performs image processing for printing the receipt image in a rotated-in-180-degrees manner in order to cause the printer 20 --which outputs an image recording medium such that a portion of the image recording medium, where an upper part of the receipt image 40 is formed, comes first-- to output the image recording medium such that a portion of the image recording medium, where a lower part of the receipt image 40 is formed, comes first, as shown in Fig. 7B. In the following descriptions, the function of printing a receipt image in a rotated manner, which is executed by the print data conversion program 35, is described as a "rotated print function."

The print data conversion program 35 generates print data to be used for causing the printer 20 to form on an image recording medium the raster image data that have been selectively subjected to the above-described various image processing operations. The print data generated by the print data conversion program 35 are output from the port connected to the printer 20 by way of the language monitor program 36 and the port driver 34, and the thus-output print data are supplied to the printer 20.

The print data conversion program 35 and the language monitor program 36 are installed in the host computer 10 by way of an information storage medium; e.g., an optical disc or the like. Further, the print data conversion program 35 and the language monitor program 36 may be provided in an integrated fashion or separately. Moreover, there may be a case where the print data generated by the print data generation program 33b are supplied directly to the language monitor program 36 without involvement of the spooler 32.

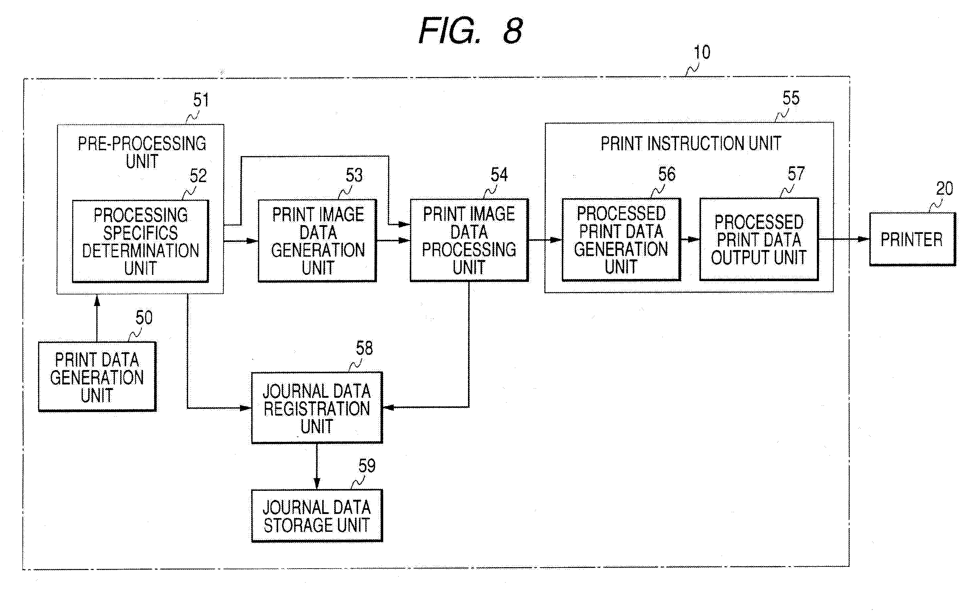

The function to be embodied by the print data conversion program 35 will now be described in detail. Fig. 8 is a functional block diagram showing, among functional blocks embodied by the host computer 10, the functional blocks pertaining to embodiments of the present invention. As illustrated, the host computer 10 includes a print data generation unit 50, a pre-processing unit 51, a print image data generation unit 53, a print image data processing unit 54, a print instruction unit 55, a journal data registration unit 58, and a journal data storage unit 59. The print data generation unit 50 is implemented as a result of the print data generation programs 33a, 33b being executed by the control unit 11. Another functional block is implemented as a result of the print data conversion program 35 and the language monitor program 36 being executed by the control unit 11.

### [1. Print Data Generation Unit]

The print data generation unit 50 generates print data, and supplies the thus-generated print data to the pre-processing unit 51. As mentioned above, the print data generation unit 50 sequentially generates, e.g., command data representing the kind of a type font, command data representing print specifics of each line, and command data representing the end of a page; and sequentially supplies the command data to the pre-processing unit 51.

### [2. Pre-processing Unit]

The pre-processing unit 51 receives the command data sequentially supplied from the print data generation unit 50. The pre-processing unit 51 supplies the thus-received command data to the print image data generation unit 53 and the journal data registration unit 58. The pre-processing unit 51 determines whether or not the received command data are "command data representing the end of a page." When the received command data are the "command data representing the end of a page," a message to this effect is reported to the print image data generation unit 53 and the journal data registration unit 58.

The pre-processing unit 51 may execute, e.g., processing for converting letters from lower case to upper case. When having received command data of, e.g., "a" "a" "a" "" "" "" "¥" "5" "0" "0" LF, the pre-processing unit 51 may convert the command data into command data of "A" "A" "A" "" "" "" "¥" "5" "0" "0" LF, and supply the thus-converted command data to the print image data generation unit 53 and the journal data registration unit 58.

### [3. Processing Specifics Determination Unit]

The pre-processing unit 51 includes a processing specifics determination unit 52. Based on a character string to be printed (hereinafter simply called "print object character string") which is included in the print data supplied from the print data generation unit 50, the processing specifics determination unit 52 determines processing specifics pertaining to raster image data (i.e., a receipt image to be printed) generated by a print image data generation unit 53 to be described later. In the present embodiment, the processing specifics determination unit 52 determines whether or not the print object character string includes a specific keyword (a specific character string), and determines processing specifics based on the result of determination.

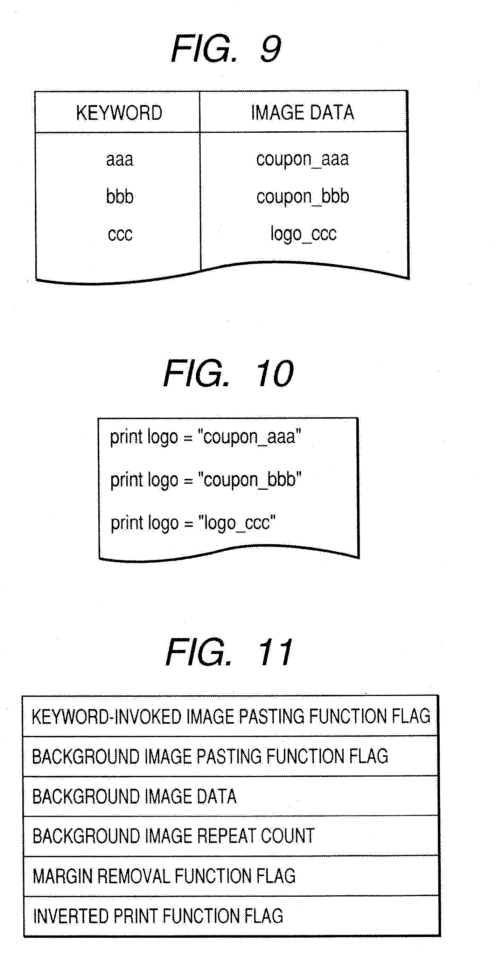

In one or more embodiments, the processing specifics determination unit 52 stores a keyword table as shown in, e.g., Fig. 9. As illustrated, the keyword table includes a "keyword" field and an "image data" field. A keyword; e.g., the name of a specific commodity or a specific corporate name, is stored in the "keyword" field. Information used for specifying the image data corresponding to a keyword is stored in the "image data" field. The name of image data (a file name) is herein assumed to be stored in the image data field. For example, the name of image data, such as a logo image, an advertisement image, or a coupon image pertaining to a specific commodity or another product related to that commodity, is stored in the "image data" field.

Every time the processing specifics determination unit 52 is supplied with the command data representing print details of each line (a print object character string of each line), the processing specifics determination unit 52 determines whether or not the print details of that line include the keyword stored in the "keyword" field. When determining that the keyword is included, the processing specifics determination unit 52 reads the name of image data corresponding to the keyword from the "image data" field, to thus generate processing specific data (information about processing specifics) of a format such as that shown in Fig. 10. In the processing specific data shown in the drawing, "print logo="coupon_aaa," for example, instructs pasting an image based on image data "coupon_aaa" to a receipt image. Namely, the processing specific data shown in the drawing serve as a command list used for instructing pasting of an image to a receipt image. When having received, from the pre-processing unit 51, a report to the effect that the command data representing the end of a page have been received, the processing specifics determination unit 52 supplies the processing specifics data to the print image data processing unit 54.

Every time the print details of each line are determined to include a keyword, the processing specifics determination unit 52 may generate instruction data of format; e.g., "print logo="coupon_aaa" and supply the instruction data to the print image data processing unit 54. The print image data processing unit 54 may generate processing specifics data such as that shown in Fig. 10.

### [4. Print Image Data Generation Unit]

The print image data generation unit 53 generates raster image data pertaining to the entire receipt image to be printed, based on the print data sequentially supplied from the pre-processing unit 51. Specifically, the print image data generation unit 53 generates image data in which pixels --constituting the receipt image-- are associated with coloring information.

The print image data generation unit 53 retains various data that are used for generating raster image data pertaining to an image to be printedbased on the print data generated by the print data generation unit 50. For example, the print image data generation unit 53 stores font image data pertaining to the kind of a font which can be specified by the command data generated by the print data generation unit 50. Based on the various types of data, the print image data generation unit 53 generates the raster image data.

Upon receiving command data representing a command to cut an image recording medium, the print image data generation unit 53 generates intermediate control data; e.g., "Feed to cutter=True; Cut percentage=50%; ...." The intermediate control data are supplied to the print instruction unit 55 by way of the print image data processing unit 54.

### [5. Print Image Data Processing Unit]

The print image data processing unit 54 subjects the raster image data supplied from the print image data generation unit 53 to various types of image processing. For example, the raster image data are subjected to image processing whose specifics are based on a print object character string included in the print data generated by the print data generation unit 50. For example, the raster image data are subjected to image processing based on processing specifics data that are supplied from the processing specifics determination unit 52. When the print object character string includes a predetermined keyword, raster image data are subjected to image processing corresponding to the keyword. For example, raster image data are subjected to vertical or horizontal inversion processing.

In one or more embodiments, the print image data processing unit 54 stores environment setting data such as those shown in Fig. 11. As illustrated, the environment setting data includes a "keyword-invoked image pasting function flag" field, a "background image pasting function flag" field, a "background image data" field, a "background image repeat count" field, a "margin removal function flag" field, and a "rotated print function flag" field. Information showing whether or not the keyword-invoked image pasting function is used is stored in the "keyword-invoked image pasting function flag" field. Information showing whether or not the background image pasting function is used is stored in the "background image pasting function flag" field. Information for specifying image data pertaining to a background image to be pasted to a receipt image is stored in the "background image data" field. The name of image data pertaining to a background image is assumed to be stored herein. The number of times output of a background image is repeated is stored in the "background image repeat count" field. Information showing whether or not the margin removal function is used is stored in the "margin removal function flag" field. Information showing whether or not a rotated print function is used is stored in the "rotated print function flag" field. Specifics of the environment setting data are edited by the user on a predetermined environment setting screen displayed on, e.g., the display unit 14 of the host computer 10.

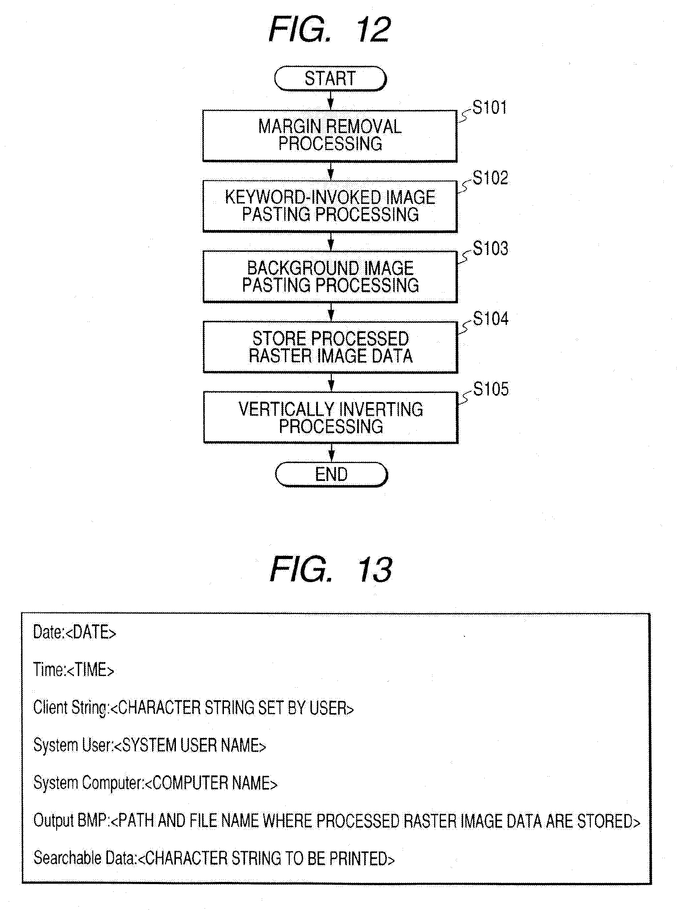

Here, processing to be executed by the print image data processing unit 54 will be described. Fig. 12 is a flowchart showing that processing.

As shown in Fig. 12, the print image data processing unit 54 first performs margin removal processing (S101). The print image data processing unit 54 removes an area of predetermined width from the upper end of the raster image data generated by the print image data generation unit 53, and removes another area of predetermined width from the lower end of the same. Execution of processing pertaining to this step is inhibited according to specifics of the "margin removal function flag" field. The upper and lower areas to be removed may be made so that the user can arbitrarily set the width of the upper and lower areas.

Next, the print image data processing unit 54 performs keyword-invoked image pasting processing (S102). The print image data processing unit 54 pastes an image to the receipt image based on the processing specific data supplied from the processing specifics determination unit 52. In one or more embodiments, the print image data processing unit 54 receives the processing specifics data (Fig. 10) from the processing specifics determination unit 52, and sequentially acquires, from the processing specifics data, the name of image data pertaining to an image to be pasted to the receipt image. Every time the print image data processing unit 54 acquires the name of image data, the print image data processing unit 54 reads from the storage unit 12 image data corresponding to the name of thus-acquired image data, and pastes the image data to a lower part of the raster image data along with a predetermined page-break image (a broken line 42 or the like). The read image data may be merged with the raster image data in a translucent manner. Execution of processing pertaining to this step is inhibited according to specifics of the "keyword-invoked image pasting function flag" field.

Next, the print image data processing unit 54 executes background image pasting processing (S103). The print image data processing unit 54 pastes a predetermined background image to the background of the receipt image. For example, the print image data processing unit 54 generates background image data in which an image --whose pixels are vertically and horizontally equal in number with the raster image data and which is specified by the "background image data" field of the environment setting data-- is repeatedly displayed at a given position the number of times specified by the "background image repeat count" field; and in which a transparent attribute is set to an area other than the background image. The print image data processing unit 54 translucently merges the background image data with the raster image data that have undergone processing pertaining to S101 and S102. Execution of processing pertaining to step S103 is inhibited in accordance with specifics of the "background image pasting function flag" field.

The print image data processing unit 54 stores the raster image data, which have undergone processing pertaining to S101 to S103, in the storage unit 12 (a hard disk drive) (S104). At this time, the raster image data are stored in a predetermined directory, and a character string consisting of, e.g., a serial number of the printer 20 and the current time, is set as a file name.

Next, the print image data processing unit 54 rotates in 180 degrees the raster image data that have undergone processing pertaining to S101 to S103 (S105). Processing pertaining to this step is inhibited in accordance with specifics of the "rotated print function flag" field.

The raster image data that have undergone processing pertaining to S101 to S105 are supplied to the print instruction unit 55. The path or file name into which the raster image data are stored in the storage unit 12 in S104 is supplied to the journal data registration unit 58 which will be described later.

### [6. Print Instruction Unit]

The print instruction unit 55 causes the printer 20 to produce a printout of the raster image data that have been generated by the print image data generation unit 53 and processed by the print image data processing unit 54. The print instruction unit 55 includes a processed print data generation unit 56 and a processed print data output unit 57.

### [7. Processed Print Data Generation Unit]

The processed print data generation unit 56 generates print data used for causing the printer 20 to produce, on an image recording medium, the raster image data processed by the print image data processing unit 54. In one or more embodiments, the processed print data generation unit 56 sequentially generates command data used for instructing the printer 20 coloring information about respective pixels in each line of dots, and supplies the thus-generated command data to the processed print data output unit 57. The processed print data generation unit 56 generates, as appropriate, command data used for causing the printer 20 to perform control whose specifics are indicated by intermediate control data generated by the print image data generation unit 53, and supplies the thus-generated command data to the processed print data output unit 57.

### [8. Processed Print Data Output Unit]

The processed print data output unit 57 sequentially outputs the print data (command data) generated by the processed print data generation unit 56 from the port connected to the printer 20, so that the print data are output to the printer 20. In this case, the printer 20 receives and interprets the command data which are sequentially received from the processed print data output unit 57. In accordance with the command data, forming a receipt image on the image recording medium, cutting the image recording medium, or the like, is executed.

### [9. Journal Data Registration Unit and Storage Unit]

The journal data storage unit 59 stores journal data. The journal data are formed by means of associating at least a portion of the print object character string included in the print data generated by the print data generation unit 50 with "raster image data that are generated by the print image data generation unit 53 based on the print data and are processed by the print image data processing unit 54."

Every time the receipt image is printed, the journal data registration unit 58 generates a journal file such as that shown in Fig. 13, and stores the thus-generated journal file into the journal data storage unit 59. As illustrated, the journal file stores the date and time (Date and Time) when the print data are accepted by the pre-processing unit 51. The journal file also stores a system user name pertaining to execution of the POS application 30a or 30b in the host computer 10 and the name of the host computer 10 (System User and System Computer). In addition, the journal file stores a character string (Client String) which can be set individually by the user of the POS application program 30a or 30b or the user of the printer 20; for example, the name of a person who is in charge of a register. Particularly, information (Output BMP) used for specifying the location where are stored the raster image data having been processed by the print image data processing unit 54 is stored in a journal file, and a print character string included in the print data generated by the print data generation unit 50 (Searchable Data) is stored in the journal file, as well.

The journal data registration unit 58 receives the print data supplied from the pre-processing unit 51, and acquires the print character string included in the print data. The journal data registration unit 58 receives, from the print image data processing unit 54, an input of a path or file name where the processed raster image data (the raster image data stored in S104) are stored. The journal data registration unit 58 generates the journal file based on the path or file name.

As has been described, the print system 1 in accordance with one or more embodiments of the present embodiment is equipped with the keyword-invoked image pasting function. When a specific keyword is included in a receipt image, an image corresponding to the keyword is automatically pasted to the receipt image. For example, an advertisement or coupon image of a commodity or another product related thereto is automatically pasted to the receipt image including the name of a specific commodity. Consequently, for example, an advertisement, a coupon, or the like, of a commodity or another product related thereto can be reliably delivered to a person who has purchased that commodity while efforts are lessened.

As a result of the print system 1 being equipped with an rotated print function, the printer 20 that outputs an image recording medium such that a part of the image recording medium, where an upper portion of a receipt image is formed, comes first can be caused to output an image recording medium such that a part of the image recording medium, where a lower portion of the receipt image is formed, comes first. In a case where the user picks up the image recording medium output from the printer 20 for referral, there may be a case where the user must switch the image recording medium from one hand to the other hand in order to change the orientation of the image recording medium (in order to rotate the image recording medium in 180 degrees). However, the print system 1 can lessen such user's efforts. Implementing the rotated print function does not require the processing specifics determination unit 52, the journal data registration unit 58, and the journal data storage unit 59.

As a result of the print system 1 being provided with the journal data registration unit 58 and the journal data storage unit 59, an attempt can be realized to enable the user, the administrator, or the like, of the POS application program 30a or 30b to comparatively, readily ascertain how the receipt image including an arbitrary character string is actually printed, by means of specifying the arbitrary character string.

In the print system 1, the above-described functions are implemented by the language monitor program 36 and the print data conversion program 35. Hence, implementing the above functions does not involve a necessity for making alterations to the POS application programs 30a, 30b, nor is there a necessity for preparing different programs for the respective POS application programs 30a, 30b.

The present invention is not limited to the above-described embodiments.

For example, the operating system executed by the host computer 10 is not limited to Windows OS (Registered Trademark) manufactured by Microsoft Corporation. Moreover, the application program executed by the host computer 10 is not limited to the POS application programs 30a, 30b. Specifically, an object to be printed by the printer 20 is not limited to the receipt image created by the POS application programs 30a, 30b. A document or image created by another application program may also be the object.

For example, the above descriptions have mentioned that the host computer 10 and the printer 20 are connected together by way of a USB cable. However, the host computer 10 and the printer 20 may also be connected by way of a communications network such as a LAN (Local Area Network) or the like. In this case, the interfaces 15 and 24 may be configured as communications interfaces used for establishing a connection with the communications network.

A program called by a designation other than the "language monitor program" (e.g., a "port emulator" or the like) may be used in place of the language monitor program 36.

For example, a function of previewing a receipt image may also be implemented. When an instruction to preview a receipt image is issued by the POS application programs 30a, 30b, the essential requirement is to display the raster image data (a bitmap file) stored in the storage unit 12 in S104 on the display unit 14 (a preview screen).

The journal data storage unit 59, for example, may be implemented by a storage unit (e.g., a hard disk drive) of another computer connected to the host computer 10 or the printer 20 by way of a communications network.

For example, among the functional blocks shown in Fig. 8, functional blocks other than the print data generation unit 50 may be implemented by the printer 20.

For example, an image corresponding to the keyword may be pasted to an upper portion of the receipt image by means of the keyword-invoked image pasting function. Alternatively, the image may be pasted to a given position in the receipt image. For example, the image may be inserted to a position in the receipt image determined from the position where the keyword is to appear.

When a plurality of keywords are included in the receipt image, at least one of the plurality of keywords is selected by means of the keyword-invoked image pasting function, and an image corresponding to the keywords may be pasted to the receipt image. For example, priority levels are stored in advance while being assigned to the respective keywords. When a plurality of keywords are included in a receipt image, at least one is selected from the plurality of keywords based on the priority levels assigned to the respective keywords, and an image corresponding to the keyword may be pasted to the receipt image. For example, when one keyword appears a plurality of times in a receipt image, an image corresponding to the keyword may be pasted only once to the receipt image by means of the keyword-invoked image pasting function. In the present embodiment, after having received processing specifics data based on the result of detection of a keyword from an entire print object character string and raster image data pertaining to the entire receipt image to be printed, the print image data processing unit 54 is to paste an image corresponding to a keyword by means of subj ecting the raster image data to image processing (processing operation) based on the processing specifics data. Therefore, pasting an image corresponding to a keyword in the manner mentioned above can be performed. Put another way, pasting of an image corresponding to a keyword can be performed with a comparatively high degree of freedom.

For example, by means of the keyword-invoked image pasting function, the image recording medium may be cut (partially or fully) rather than the broken line 42 being printed between a receipt image main body portion 40a and a coupon image portion 41a (an image portion corresponding to a keyword).

In the above descriptions, when the receipt image (the receipt image that is an object of the print command) prepared by the POS application program 30a or 30b includes a specific keyword, an image (e.g., a logo image, an advertisement image, a coupon image, or the like) corresponding to the keyword is assumed to be pasted to the receipt image. However, the following function may also be implemented in place of the above function (the keyword-invoked image pasting function) or in conjunction with the above function.

For example, when a key image (a specific image) is included in the receipt image prepared by the POS application program 30a or 30b, the receipt image may be subjected to image processing corresponding to the key image. For example, a coupon image or the like corresponding to the key image may be pasted. This function can be implemented in the same manner as is the keyword-invoked image pasting function. Specifically, the essential requirement for the processing specifics determination unit 52 is to store a key image and image data, such as a coupon image or the like, such that the image and the image data are associated with each other. Based on the print data supplied from the print data generation unit 50, the processing specifics determination unit 52 determines whether or not the receipt image prepared by the POS application program 30a or 30b includes the key image. The only requirement is to supply the print image data processing unit 54 with processing specifics data (Fig. 10) based on the result of determination.

Alternatively, the receipt image may be subjected to image processing corresponding to timing when the receipt image prepared by the POS application program 30a or 30b is printed. For example, a coupon image or the like corresponding to the timing may be pasted. This function can also be implemented in the same manner as the keyword-invoked image pasting function. Specifically, the only requirement for the processing specifics determination unit 52 is to store timing requirements and image data such as a coupon image or the like such that the timing requirements and the image data are associated with each other. Here, the timing requirements are information showing, e.g., a time, a time period, a date, a date and time, a day of the week, or another period of time. In response to supply of print data from the print data generation unit 50, the essential requirement for the processing specifics determination unit 52 is to determine whether or not the current date and time or the current time satisfies the timing requirements (whether or not the current date and time or the current time is a predetermined time, whether or not the current date and time or the current time is included in a predetermined period, or the like), and to supply the print image data processing unit 54 with processing specifics data (Fig. 10) based on the result of determination. As above, for example, it becomes possible to issue a coupon when a predetermined time has come, or the like. In this case, it is better to store, in the journal file (Fig. 13), the date and time or the time used for determination by the processing specifics determination unit 52.

The rotated print function may be automatically performed in accordance with an installation posture of the printer 20. The installation posture of the printer 20 may be one of such that: a posture to be installed upright on an installation mounting; and a posture to be installed sideways by hanging the printer 20 on a wall with the undersurface of the printer 20 being placed on the wall. The installation posture of the printer 20 can be detected by providing an installation posture detection sensor (detecting unit 25) on the printer 20. The installation posture detection sensor may be configured to output a signal that indicates the installation posture of the printer 20. The installation posture detection sensor may be configured by a transparent-type optical sensor and a detection piece that swings in accordance with a tilt of the printer 20 being installed, to obtain an ON/OFF signal that indicates the installation posture of the printer 20. In a case where the printer 20 is configured as described above, and detected by the installation posture detection sensor that the printer 20 is installed sideways on a wall with the undersurface of the printer 20 being placed on the wall, information to apply the rotated print function is stored in the "rotated print function flag" field. According to this configuration, the rotated print function is automatically selected in a case where the printer 20 is installed sideways on a wall with the undersurface of the printer 20 being placed on the wall, without necessity to edit the environment setting data by the user. Accordingly, the printer 20 automatically performs output of the image recording medium in such a way that a portion of the image recording medium, where a lower part of an image to be printed is formed, comes first. Therefore, convenience the user can be improved.

As described above with reference to the embodiments, there is provided a print system that lessens efforts to be made for switching an image recording medium from one hand to the other hand when the user picks up the image recording medium output from a printer and refers to details of the image recording medium.

According to embodiments of the present invention, there is provided at least the following exemplary configurations.

(1) A print system for causing a printer to produce a printout of an image based on print data generated by any of a plurality of programs, the system being characterized by including: a print image data generation unit that generates first raster image data pertaining to an image to be printed, based on the print data; a print image data processing unit that generates second raster image data for printing out a second image being rotated in 180 degrees from a first image that is to be printed out based on the first raster image data, by performing an image processing onto the first raster image data and a print instruction unit that causes the printer to produce a printout of the second raster image data.
(2) A method for controlling a print system is a method for controlling a print system which causes a printer to produce a printout of an image based on print data generated by any of a plurality of programs, the method including: generating first raster image data based on the print data; generating second raster image data for printing out a second image being rotated in 180 degrees from a first image that is to be printed out based on the first raster image data, by performing an image processing onto the first raster image data; and causing the printer to produce a printout of the second raster image data.
(3) A computer-readable program product for causing a computer to function as a print system for causing a printer to produce a printout of an image based on print data generated by any one of a plurality of programs, the program product causing the computer to perform procedures including: generating first raster image data pertaining to an image to be printed based on the print data; generating second raster image data for printing out a second image being rotated in 180 degrees from a first image that is to be printed out based on the first raster image data, by performing an image processing onto the first raster image data; and causing the printer to produce a printout of the second raster image data.

An information recording medium of the present invention is a computer-readable information recording medium on which the program is recorded.

Embodiments of the present invention relate to a print system for causing a printer to produce a printout of an image based on print data generated by any of a plurality of programs. In embodiments of the present invention, raster image data pertaining to an image to be printed are generated based on the print data. Next, the raster image data are rotated in 180 degrees. The printer produces a printout of the thus-rotated raster image data. According to embodiments of the present invention, in a printer which outputs an image recording medium in such a way that a portion of the image recording medium --where an upper part of an image to be printed is formed-- comes first, the printer can output the image recording medium in such a way that a portion of the image recording medium --where a lower part of the image to be printed is formed-- comes first. There has been a case where, when picking up the image recording medium output from the printer and referring to details of the image recording medium, the user must switch the image recording medium from one hand to the other hand in order to change the orientation of the image recording medium (in order to rotate the image recording medium in 180 degrees). However, according to embodiments of the present invention, such user's efforts can be lessened.

In one aspect of embodiments of the present invention, the print system may include a print request device which is connected to the printer in a communicable manner and which causes the printer to produce a printout of an image based on the print data generated by any of the plurality of programs. The print image data generation unit, the print image data processing unit, and the print instruction unit may be included in the print request device. Further, the print instruction unit may generate print data used for causing the printer to produce a printout of the raster image data that have been generated by the print image data generation unit and have been rotated by the print image data processing unit, and may output the print data to the printer.

In one aspect of embodiments of the present invention, the print system may be configured to include a detecting unit that detects an installation posture of the printer, and that the rotating process for rotating the raster image data by the print image data processing unit is performed in accordance with a detection result detected by the detecting unit.

The foregoing description of specific embodiments has been presented for purposes of illustration and description. It is not intended to be exhaustive or to limit the invention to the precise form disclosed. Modifications and variations are possible in light of the above teachings or may be obtained from practice of the invention. The disclosed embodiments were chosen and described in order to explain the principles of the invention and its practical application program to enable one skilled in the art to utilize the invention in various embodiments and with various modifications as are suited to the particular use contemplated. It is intended that the scope of the invention be defined by the claims appended hereto, and their equivalents.

## Claims

1. A print system (1) for causing a printer (20) to produce a printout of an image based on print data generated by any one of a plurality of programs (30a, 30b), the print system (1) comprising:
a print image data generation unit (50) that generates first raster image data pertaining to an image to be printed, based on the print data;
a print image data processing unit (54) that generates second raster image data for printing out a second image being rotated in 180 degrees from a first image that is to be printed out based on the first raster image data, by performing an image processing onto the first raster image data; and
a print instruction unit (55) that causes the printer to produce a printout of the second raster image data.

2. The print system according to claim 1, the print system
(1) further comprising a print request device that is connected to the printer and causes the printer to produce a printout of an image based on the print data generated by any one of the plurality of programs (30a, 30b),
wherein the print request device comprises the print image data generation unit (50), the print image data processing unit (54), and the print instruction unit (55), and
wherein the print instruction unit generates print data for causing the printer (20) to produce a printout of the second raster image data.

3. A method for controlling a print system (1) for causing a printer (20) to produce a printout of an image based on print data generated by any one of a plurality of programs (30a, 30b), the method comprising:
generating first raster image data based on the print data;
generating second raster image data for printing out a second image being rotated in 180 degrees from a first image that is to be printed out based on the first raster image data, by performing an image processing onto the first raster image data; and
causing the printer to produce a printout of the second raster image data.

4. A computer-readable program product for causing a computer to function as a print system (1) for causing a printer (20) to produce a printout of an image based on print data generated by any one of a plurality of programs (30a, 30b), the program product causing the computer to perform procedures comprising:
generating first raster image data pertaining to an image to be printed based on the print data;
generating second raster image data for printing out a second image being rotated in 180 degrees from a first image that is to be printed out based on the first raster image data, by performing an image processing onto the first raster image data; and
causing the printer to produce a printout of the second raster image data.

5. The print system according to claim 1, further comprising a detecting unit (25) that detects an installation posture of the printer,
wherein the print image data processing unit generates the second raster image data in accordance with a detection result detected by the detecting unit (25).

6. The print system according to claim 5, wherein the detecting unit (25) is provided on the printer.

7. The print system according to claim 1, wherein the print image data processing unit (54) acquires the print data generated by one of the plurality of programs (30a, 30b) through a specific program (33b, 31) that receives an output from the plurality of programs (30a, 30b) and outputs to the printer, and
wherein the print instruction unit (55) causes the printer to produce the printout of the second raster image data through the specific program (33b, 31).
